# EUROPÄISCHE PATENTSCHRIFT

(11) **EP 0 920 659 B1**
(45) Veröffentlichungstag und Bekanntmachung des Hinweises auf die Patenterteilung: **12.06.2002**
(21) Anmeldenummer: 97932758.2
(22) Anmeldetag: 10.07.1997
(51) Int. Cl.: G06F 1/00, H01L 23/58, H01L 23/544

(54) **GEGEN ÄUSSERE EINGRIFFE GESICHERTE HALBLEITERSCHALTUNG**
SEMICONDUCTOR CIRCUIT SECURE AGAINST OUTSIDE ACCESSES
CIRCUIT A SEMI-CONDUCTEUR PROTEGE CONTRE LES INTERVENTIONS EXTERIEURES

(30) Priorität: 23.08.1996 DE 19634135
(43) Veröffentlichungstag der Anmeldung: 09.06.1999
(73) Patentinhaber: Infineon Technologies AG, 81669 München (DE)
(72) Erfinder: ZELLNER, Angela, D-80469 München (DE); RAESCHMEIER, Andreas, D-81825 München (DE); POCKRANDT, Wolfgang, D-85293 Reichertshausen (DE)
(74) Vertreter: Epping Hermann & Fischer
(86) Internationale Anmeldenummer: DE9701460
(87) Internationale Veröffentlichungsnummer: WO9808154

(56) Entgegenhaltungen:
- EP-A- 0 172 108
- EP-A- 0 378 306
- DE-A- 3 706 251
- US-A- 5 369 299
- US-A- 5 473 112
- "UTILIZE MICRO-ENCAPSULATED CONDUCTORS TO PROVIDE A TAMPER AWARENESS ENCLOSURE FOR SENSITIVE CIRCUITS" RESEARCH DISCLOSURE, Nr. 34473, 1.Dezember 1992, EMSWORTH, GB, Seite 954 XP000327179

## Beschreibung

Die Erfindung betrifft eine Halbleiterschaltung, insbesondere zur Verwendung in einem integrierten Baustein, die die folgenden Merkmale aufweist:
- wenigstens eine Betriebsbaugruppe mit einer Ansteuerschaltung und mit einem Datenspeicher;
- wenigstens eine Initialisierungsbaugruppe zum Testen und/oder zum Initialisieren der Betriebsbaugruppe bzw. der Betriebsbaugruppen;
- wenigstens eine Betriebsbaugruppe ist über wenigstens eine Verbindungsleitung mit wenigstens einer Initialisierungsbaugruppe verbunden.

Bei den vorgenannten gattungsgemäßen Halbleiterschaltungen ist der Datenspeicher häufig als nicht-flüchtiger, programmierbarer Datenspeicher ausgebildet. Bei der Fertigstellung einer Halbleiterschaltung werden beispielsweise mit Hilfe der Initialisierungsbaugruppe Daten in den Datenspeicher geschrieben. Weiterhin ist es möglich, die Betriebsbaugruppe mit Hilfe der Initialisierungsbaugruppe in einen Zustand zu versetzen, in dem diese ausgetestet werden kann. Dazu ist die Initialisierungsbaugruppe über Verbindungsleitungen mit der Betriebsbaugruppe verbunden. Derartige Verbindungsleitungen sind aus leitfähigem Material, wie aus leitfähigem Polymer wie insbesondere Poly-Silizium oder aus Metall ausgeführt.

Um die Zuverlässigkeit von Systemen zu erhöhen, für die die gattungsgemäßen Halbleiterschaltungen verwendet werden, wird die Initialisierungsbaugruppe nach der Fertigstellung der Halbleiterschaltung dauerhaft von der Betriebsbaugruppe getrennt. Dadurch werden nämlich die Funktionen der Initialisierungsbaugruppe zuverlässig deaktiviert, so daß diesbezüglich unerwünschte Veränderungen unmöglich sind. Nach der Fertigstellung der gattungsgemäßen Halbleiterschaltung werden dazu die vorgenannten Verbindungsleitungen aufgetrennt. Dies geschieht z. B. durch elektrisches Zünden, durch Lasercutten oder auch durch mechanischen Durchtrennen. Insbesondere in dem Fall, in dem die Verbindungsleitungen durch Lasercutten oder durch mechanisches Durchtrennen unterbrochen werden, wird die Halbleiterschaltung nachfolgend in ein isolierendes Gehäusematerial eingebettet, das zusätzlich Schutz gegen unerwünschte Veränderungen gewährt.

Um ein Reaktivieren der durchtrennten Verbindungsleitungen zu Manipulationszwecken zu erschweren, ist es im Stand der Technik bekannt, die Verbindungsleitung in einer möglichst tief gelegenen Schicht der Halbleiterschaltung anzuordnen. Die freien Enden der durchtrennten Verbindungsleitung können dann nur auf besonders aufwendige und komplizierte Weise wieder miteinander verbunden werden. Dazu müßte zunächst die Verbindungsleitung freigelegt werden. Dies ist besonders schwierig, da die über der Verbindungsleitung gelegenen Schichten der Halbleiterschaltung entfernt werden müssen, ohne die Halbleiterschaltung zu zerstören. Anschließend könnte dann eine leitende Verbindung der freien Enden der Verbindungsleitung hergestellt werden. In der Praxis kommt dies in der Regel nicht vor, da die gattungsgemäßen Halbleiterschaltungen durch die vorstehend beschriebenen Maßnahmen gut gegen unerwünschte Veränderungen geschützt sind.

Trotz der günstigen Ausbildung der gattungsgemäßen Halbleiterschaltungen im Hinblick auf ein unerwünschtes Reaktivieren der Initialisierungsbaugruppe kann es trotzdem zu Veränderungen an der Halbleiterschaltung kommen.

Die US 5,473,112 beschreibt eine Halbleiterschaltung, bei der ein Kurzschluß zwischen einer Datenleitung und wenigstens einer benachbarten Schutzleitung einen Multiplexer in einen derartigen Zustand bringt, daß ein Zugriff auf den Datenspeicher nicht mehr möglich ist. Die dort genannten Datenleitungen befinden sich dabei innerhalb der Betriebsbaugruppe, zum Beispiel zwischen der Ansteuerschaltung und dem Datenspeicher. Die Halbleiterschaltung selbst verbleibt dabei weiterhin voll funktionsfähig.

Die EP 0 172 108 offenbart eine Halbleiterschaltung mit einem integrierten Baustein, wobei eine aufgetrennte Verbindungsleitung durch eine an Masse geschaltete Deckplatte geschützt ist. Beim Durchdringen der Deckplatte mit einer Prüfspitze würde ein Kurzschluß erzeugt werden, wodurch es nicht möglich ist, mit der Prüfspitze ein Signal von der Verbindungsleitung abzugreifen. Es ist nicht vorgesehen, eine Betriebsbaugruppe oder eine Initialisierungsschaltung der dortigen Halbleiterschaltung in einen inaktiven Zustand zu verbringen.

Es ist daher die Aufgabe der Erfindung, eine gattungsgemäße Halbleiterschaltung bereitzustellen, die einen verbesserten Schutz gegen unerwünschte Datenänderungen in der Betriebsbaugruppe aufweist.

Diese Aufgabe wird gemäß der Erfindung durch eine gattungsgemäße Halbleiterschaltung gelöst, die weiterhin die folgenden Merkmale aufweist:
- die Verbindungsleitung wird nach Fertigstellung der Halbleiterschaltung dauerhaft aufgetrennt,
- im Bereich wenigstens einer Verbindungsleitung ist wenigstens eine mit der Initialisierungsbaugruppe beziehungsweise mit den Initialisierungsbaugruppen in Verbindung stehende Potentialleitung vorgesehen,
- die Initialisierungsbaugruppe ist so ausgebildet, daß diese bei Verbindung der Potentialleitung beziehungsweise wenigstens einer der Potentialleitungen mit der Verbindungsleitung beziehungsweise mit wenigstens einer der Verbindungsleitungen in einen inaktiven Zustand versetzbar ist.

Die der Erfindung zugrunde liegende Aufgabe wird weiterhin durch eine gattungsgemäße Halbleiterschaltung gelöst, die die folgenden Merkmale aufweist:
- Die Verbindungsleitung wird nach Fertigstellung der Halbleiterschaltung dauerhaft aufgetrennt,
- im Bereich wenigstens einer Verbindungsleitung ist wenigstens eine mit der Betriebsbaugruppe beziehungsweise mit wenigstens einer der Betriebsbaugruppen in Verbindung stehende Potentialleitung vorgesehen,
- die Betriebsbaugruppe ist so ausgebildet, daß diese bei Verbindung der Potentialleitung beziehungsweise wenigstens einer der Potentialleitungen mit einer Verbindungsleitung beziehungsweise mit wenigstens einer der Verbindungsleitungen in einen inaktiven Zustand versetzbar ist.

Mit den derartigen Potentialleitungen wird ein Reaktivieren der durchtrennten Verbindungsleitung wesentlich erschwert. Die Potentialleitungen sind nämlich in möglichst engem Abstand neben der in möglichst geringer Breite gehaltenen Verbindungsleitungen angeordnet, und zwar derart, daß bei dem Versuch, die Verbindungsleitung zum Zweck der Wiederherstellung der elektrischen Verbindung zu kontaktieren, ein elektrisch leitender Kontakt bzw. ein Kurzschluß zwischen Verbindungsleitung und Potentialleitung entsteht. Ein derartiger Kurzschluß kann von der Betriebsbaugruppe und/oder der Initialisierungsbaugruppe abgetastet werden. Auf das Abtasten eines derartigen Kurzschlusses hin versetzt sich die Betriebsbaugruppe und/oder die Initialisierungsbaugruppe in einen inaktiven Zustand, was das Ausspähen und/oder Ändern von Daten im Datenspeicher und das Nachvollziehen von Funktionen der Betriebsbaugruppe unmöglich macht.

Vorzugsweise befinden sich die Potentialleitungen auf einem bestimmten, charakteristischen Potential, das besonders einfach von der Betriebsbaugruppe bzw. von der Initialisierungsbaugruppe erkannt werden kann. Dadurch ist ein schnelles und zuverlässiges Erkennen eines Reparaturversuches der Verbindungsleitung möglich.

Weiterhin ist es vorteilhaft, wenn die Verbindungsleitung zusammen mit der Potentialleitung in einer möglichst tief gelegenen Schicht der Halbleiterschaltung "vergraben" ist. wenn in einem Manipulationsversuch die Verbindungsleitung und die Potentialleitung freigelegt worden sind, ist dann eine tiefe Grube in der Halbleiterschaltung vorhanden, in der die Verbindungsleitung nur sehr schwer kontaktiert werden kann, ohne einen Kurzschluß mit der daneben gelegenen Potentialleitung zu verursachen. Dadurch ergibt sich eine besonders zuverlässige Halbleiterschaltung.

In Weiterbildung der Erfindung sind wenigstens eine Verbindungsleitung und wenigstens eine Potentialleitung im wesentlichen zueinander parallel ausgeführt. Eine derartige Halbleiterschaltung kann besonders einfach hergestellt werden.

Weiterhin sind im Bereich einer Verbindungsleitung wenigstens zwei Potentialleitungen vorgesehen. Bei einer derartigen Ausbildung mit mehreren Potentialleitungen um eine Verbindungsleitung herum ist eine besonders zuverlässige Ausführung der erfindungsgemäßen Halbleiterschaltung verwirklicht. Dann ist es nämlich nahezu unmöglich, auf die Verbindungsleitung zuzugreifen, ohne eine leitende Verbindung mit einer Potentialleitung zu erzeugen, was die Baugruppen der Halbleiterschaltung in einen inaktiven Zustand versetzt. Dadurch entsteht eine besonders zuverlässige Halbleiterschaltung.

Schließlich ist gemäß der Erfindung vorgesehen, daß die Halbleiterschaltung von einem isolierenden Gehäuse umgeben ist. Im Zusammenhang mit einem derartigen isolierenden Gehäuse wird das Freilegen der Halbleiterschaltung und der Verbindungsleitung zusätzlich erschwert, so daß unerwünschte Veränderungen erschwert werden.

Die Erfindung ist in der Zeichnung anhand eines Ausführungsbeispiels näher veranschaulicht.
Figur 1 zeigt einen Abschnitt einer Verbindungsleitung einer erfindungsgemäßen Halbleiterschaltung in der Draufsicht;
Figur 2 zeigt den Abschnitt der Verbindungsleitung aus Figur 1 im Querschnitt;
Figur 3 zeigt den Abschnitt der erfindungsgemäßen Verbindungsleitung aus Figur 2 nach einem Verbindungsversuch.

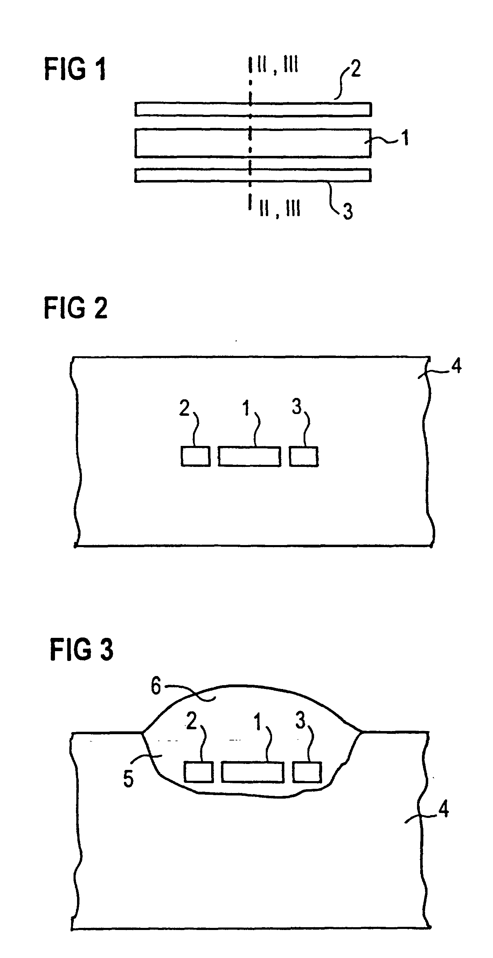

Figur 1 zeigt einen Ausschnitt aus einer erfindungsgemäßen Halbleiterschaltung.

Die Halbleiterschaltung weist eine in dieser Ansicht nicht gezeigte Betriebsbaugruppe und eine in dieser Ansicht ebenfalls nicht gezeigte Initialisierungsbaugruppe auf, die durch eine Verbindungsleitung 1 mit einer Breite von ca. 1µm miteinander in Verbindung stehen. Die Verbindungsleitung 1 ist nach der Fertigstellung der Halbleiterschaltung an einer Trennstelle A-B durchtrennt worden. Im Bereich der Verbindungsleitung 1 und mit einem Abstand von jeweils ca. 1µm von dieser beabstandet sind weiterhin eine erste Potentialleitung 2 und eine zweite Potentialleitung 3 vorgesehen. Die Potentialleitung 2 und die Potentialleitung 3 befinden sich auf einem bestimmten Potential, das sowohl von der Betriebsbaugruppe als auch von der Initialisierungsbaugruppe abgetastet werden kann.

Figur 2 zeigt den Ausschnitt der Halbleiterschaltung aus Figur 1 an der Trennstelle A-B im Querschnitt.

Wie in dieser Ansicht besonders gut zu sehen ist, sind die Verbindungsleitung 1, die erste Potentialleitung 2 und die zweite Potentialleitung 3 in einer tieferen Schicht der von einem Gehäuse 4 umgebenen Halbleiterschaltung gelegen.

Figur 3 zeigt den Abschnitt der erfindungsgemäßen Halbleiterschaltung aus Figur 2 nach einem Versuch, die unterbrochenen Enden der Verbindungsleitung 1 an der Trennstelle A-B wieder miteinander zu verbinden.

Zu diesem Zweck ist das Gehäuse 4 bis auf die Höhe derjenigen Schicht der Halbleiterschaltung abgetragen worden, in der die Verbindungsleitung 1, die erste Potentialleitung 2 und die zweite Potentialleitung 3 gelegen sind. Dabei ist im Bereich der Trennstelle A-B eine Grube 5 entstanden, die sich soweit in das Gehäuse 4 hinein erstreckt, daß die Verbindungsleitung 1 frei liegt. Dabei sind auch die erste Potentialleitung 2 und die zweite Potentialleitung 3 mit freigelegt worden.

Nach dem Auffüllen der Grube 5 mit einer elektrisch leitenden Masse 6 sind die freien Enden der aufgetrennten Verbindungsleitung 1 wieder elektrisch miteinander verbunden. Dabei ist auch eine elektrisch leitende Verbindung zwischen der Verbindungsleitung 1, der ersten Potentialleitung 2 und der zweiten Potentialleitung 3 hergestellt worden. Dies wird sowohl von der Betriebsbaugruppe als auch von der Initialisierungsbaugruppe abgetastet, so daß beide Baugruppen in einen inaktiven Zustand versetzt werden, der ein Ausspähen von Daten in der Betriebsbaugruppe verhindert.

## Patentansprüche

1. Halbleiterschaltung, insbesondere zur Verwendung in einem integrierten Baustein, die die folgenden Merkmale aufweist:
- wenigstens eine Betriebsbaugruppe mit einer Ansteuerschaltung und mit einem Datenspeicher,
- wenigstens eine Initialisierungsbaugruppe zum Testen und/oder zum Initialisieren der Betriebsbaugruppe bzw. der Betriebsbaugruppen,
- wenigstens eine Betriebsbaugruppe ist über wenigstens eine Verbindungsleitung mit wenigstens einer Initialisierungsbaugruppe verbunden,
**gekennzeichnet durch** die folgenden Merkmale:
- die Verbindungsleitung (1) wird nach Fertigstellung der Halbleiterschaltung dauerhaft aufgetrennt,
- im Bereich wenigstens einer Verbindungsleitung (1) ist wenigstens eine mit der Initialisierungsbaugruppe bzw. mit den Initialisierungsbaugruppen in Verbindung stehende Potentialleitung (2, 3) vorgesehen,
- die Initialisierungsbaugruppe ist so ausgebildet, daß diese bei Verbindung der Potentialleitung bzw. wenigstens einer der Potentialleitungen (2, 3) mit der Verbindungsleitung (1) bzw. mit wenigstens einer der Verbindungsleitungen in einen inaktiven Zustand versetzbar ist.

2. Halbleiterschaltung, insbesondere zur Verwendung in einem integrierten Baustein, die die folgenden Merkmale aufweist:
- wenigstens eine Betriebsbaugruppe mit einer Ansteuerschaltung und mit einem Datenspeicher,
- wenigstens eine Initialisierungsbaugruppe zum Testen und/oder zum Initialisieren der Betriebsbaugruppe bzw. der Betriebsbaugruppen,
- wenigstens eine Betriebsbaugruppe ist über wenigstens eine Verbindungsleitung mit wenigstens einer Initialisierungsbaugruppe verbunden,
**gekennzeichnet durch** die folgenden Merkmale:
- die Verbindungsleitung (1) wird nach Fertigstellung der Halbleiterschaltung dauerhaft aufgetrennt,
- im Bereich wenigstens einer Verbindungsleitung (1) ist wenigstens eine mit der Betriebsbaugruppe bzw. mit wenigstens einer der Betriebsbaugruppen in Verbindung stehende Potentialleitung (2, 3) vorgesehen,
- die Betriebsbaugruppe ist so ausgebildet, daß diese bei Verbindung der Potentialleitung bzw. wenigstens einer der Potentialleitungen (2, 3) mit der Verbindungsleitung (1) bzw. mit wenigstens einer der Verbindungsleitungen in einen inaktiven Zustand versetzbar ist.

3. Halbleiterschaltung nach Anspruch 1 oder Anspruch 2, **dadurch gekennzeichnet, daß** wenigstens eine Verbindungsleitung (1) und wenigstens eine Potentialleitung (2, 3) im wesentlichen zueinander parallel ausgeführt sind.

4. Halbleiterschaltung nach einem der vorhergehenden Ansprüche, **dadurch gekennzeichnet, daß** im Bereich einer Verbindungsleitung (1) wenigstens zwei Potentialleitungen (2, 3) vorgesehen sind.

5. Halbleiterschaltung nach einem der vorhergehenden Ansprüche, **dadurch gekennzeichnet, daß** die Halbleiterschaltung von einem isolierenden Gehäuse (4) umgeben ist.

## Claims

1. Semiconductor circuit, in particular for use in an integrated module, which has the following features:
- at least one operational assembly with a drive circuit and with a data memory;
- at least one initialization assembly for testing and/or for initializing the operational assembly or operational assemblies;
- at least one operational assembly is connected to at least one initialization assembly via at least one connecting line;
**characterized by** the following features:
- the connecting line (1) is permanently disconnected after completion of the semiconductor circuit;
- at least one potential line (2, 3) which is connected to the initialization assembly or to the initialization assemblies, is provided in the region of at least one connecting line (1);
- the initialization assembly is designed in such a way that, when the potential line or at least one of the potential lines (2, 3) is connected to the connecting line (1) or to at least one of the connecting lines, the said initialization assembly can be placed in an inactive state.

2. Semiconductor circuit, in particular for use in an integrated module, which has the following features:
- at least one operational assembly with a drive circuit and with a data memory;
- at least one initialization assembly for testing and/or for initializing the operational assembly or operational assemblies;
- at least one operational assembly is connected to at least one initialization assembly via at least one connecting line;
**characterized by** the following features:
- the connecting line (1) is permanently disconnected after completion of the semiconductor circuit;
- a potential line (2, 3) which is connected to the operational assembly or to at least one of the operational assemblies, is provided in the region of at least one connecting line (1);
- the operational assembly is designed in such a way that, when the potential line or at least one of the potential lines (2, 3) is connected to the connecting line (1) or to at least one of the connecting lines, the said initialization assembly can be placed in an inactive state.

3. Semiconductor circuit according to Claim 1 or Claim 2, **characterized in that** at least one connecting line (1) and at least one potential line (2, 3) are implemented essentially parallel to one another.

4. Semiconductor circuit according to one of the preceding claims, **characterized in that** at least two potential lines (2, 3) are provided in the region of one connecting line (1).

5. Semiconductor circuit according to one of the preceding claims, **characterized in that** the semiconductor circuit is surrounded by an insulating housing (4).

## Revendications

1. Circuit à semiconducteur destiné à être utilisé notamment dans un module intégré qui présente les caractéristiques suivantes :
- au moins un bloc de service ayant un circuit de commande et une mémoire de données,
- au moins un bloc d'initialisation pour tester et/ou pour initialiser le bloc de service ou les blocs de service,
- au moins un bloc de service est relié à au moins un bloc d'initialisation par au moins une ligne de liaison,
**caractérisé par** les dispositions suivantes :
- la ligne (1) de liaison est rompue de manière permanente après que le circuit à semiconducteur est fini de fabrication,
- dans la zone d'au moins une ligne (1) de liaison il est prévu au moins une ligne (2, 3) de potentiel en liaison avec le bloc d'initialisation ou avec les blocs d'initialisation,
- le bloc d'initialisation est constitué de façon à pouvoir être mis en un état inactif lors de la liaison de la ligne de potentiel ou d'au moins une des lignes (2, 3) de fois de potentiel à la ligne (1) de liaison ou à au moins l'une des lignes de liaison.

2. Circuit à semiconducteur destiné à être utilisé notamment dans un module intégré qui présente les caractéristiques suivantes :
- au moins un bloc de service ayant un circuit de commande et une mémoire de données,
- au moins un bloc d'initialisation pour tester et/ou pour initialiser le bloc de service ou les blocs de service,
- au moins un bloc de service est relié à au moins un bloc d'initialisation par au moins une ligne de liaison,
**caractérisé par** les dispositions suivantes :
- la ligne (1) de liaison est rompue de manière permanente après que le circuit à semiconducteur est fini de fabrication,
- dans la zone d'au moins une ligne (1) de liaison, il est prévu au moins une ligne (2, 3) de potentiel, en liaison avec le bloc de service ou avec au moins l'un des blocs de service,
- le bloc de service est constitué, de façon à pouvoir être mis dans un état inactif lors de la liaison de la ligne de potentiel ou de la au moins l'une des lignes (2, 3) de potentiel, avec la ligne (2) de liaison ou la au moins une des lignes de liaison.

3. Circuit à semiconducteur suivant la revendication 1 ou suivant la revendication 2, **caractérisé en ce qu'**au moins l'une des lignes (1) de liaison et au moins l'une des lignes (2, 3) de potentiel sont réalisées en étant sensiblement parallèles l'une à l'autre.

4. Circuit à semiconducteur suivant l'une des revendications précédentes, **caractérisé en ce que** dans la zone d'une ligne (1) de liaison, il est prévu au moins deux lignes (2, 3) de potentiel.

5. Circuit à semiconducteur suivant l'une des revendications précédentes, **caractérisé en ce que** le circuit à semiconducteur est entouré d'un boîtier (4) isolant.
